# EUROPEAN PATENT SPECIFICATION

(11) **EP 4 538 063 B1**
(45) Date of publication and mention of the grant of the patent: **09.12.2026**
(21) Application number: 24198879.9
(22) Date of filing: 06.09.2024
(51) Int. Cl.: B60C 11/03, B60C 11/13

(54) **MOTORCYCLE TIRE**
MOTORRADREIFEN
PNEU DE MOTOCYCLETTE

(30) Priority: 12.10.2023 JP 2023176995
(43) Date of publication of application: 16.04.2025
(73) Proprietor: Sumitomo Rubber Industries, Ltd., Kobe-shi, Hyogo 651-0072 (JP)
(72) Inventor: ICHIRYU, Yutaka, Kobe-shi, 651-0072 (JP)
(74) Representative: Manitz Finsterwald Patent- und Rechtsanwaltspartnerschaft mbB

(56) References cited:
- EP-A1- 4 331 869
- EP-B1- 2 512 828
- WO-A1-03/061994
- WO-A1-2021/261009

## Description

### BACKGROUND OF THE INVENTION

### Field of the Invention

The present invention relates to a motorcycle tire.

### Background Art

JP 2022-165795 A describes a motorcycle tire having a circumferential groove formed on a tread portion thereof. The circumferential groove extends in a zigzag shape so as to include bent portions located on one side and the other side of the tire equator and connection portions connecting the bent portions. Such a circumferential groove is expected to have an effect of suppressing poor visibility of a rider due to a water film being pushed forward in the traveling direction.

In recent years, there has been a demand for motorcycle tires to suppress the above-described poor visibility and water splashing onto motorcycles or riders over a long period of time.

WO 2021/261009 A1 discloses a motorcycle tire according to the preamble of claim 1. Other related tires are disclosed in EP 2 512 828 B1, WO 03/061994 A1, and EP 4 331 869 A1.

The present disclosure has been made in view of the above-described problem, and an object of the present invention is to provide a motorcycle tire that can suppress forward water splashing during running on a wet road surface over a long period of time.

### SUMMARY OF THE INVENTION

The present invention is directed to a motorcycle tire including a tread portion, wherein: the tread portion includes a first tread end, a second tread end, a tread surface between the first tread end and the second tread end, and a circumferential groove extending on the tread surface continuously in a tire circumferential direction; the circumferential groove includes a plurality of first inclined portions inclined in a first direction with respect to the tire circumferential direction, and a plurality of second inclined portions inclined in a direction opposite to the first direction; the circumferential groove includes a pair of groove walls extending inward in a tire radial direction from the tread surface; in a groove cross-section in a tire meridional direction of each of the plurality of first inclined portions, each of the pair of groove walls is inclined toward the first tread end side with respect to a tread normal line at a groove edge while extending inward in the tire radial direction; and in a groove cross-section in the tire meridional direction of each of the plurality of second inclined portions, each of the pair of groove walls is inclined toward the second tread end side with respect to a tread normal line at the groove edge while extending inward in the tire radial direction.

As a result of adopting the above configuration, the motorcycle tire of the present invention can suppress forward water splashing over a long period of time.

### BRIEF DESCRIPTION OF THE DRAWINGS

FIG. 1 is a development view of a tread portion of a motorcycle tire showing one embodiment of the present invention;
FIG. 2 is a plan view of a circumferential groove;
FIG. 3(A) is a cross-sectional view taken along a line A-A in FIG. 2;
FIG. 3(B) is a cross-sectional view taken along a line B-B in FIG. 2;
FIG. 4(A) is a cross-sectional view taken along a line C-C in FIG. 2;
FIG. 4(B) is a cross-sectional view of another embodiment of FIG. 4(A);
FIG. 5(A) is a cross-sectional view taken along a line D-D in FIG. 2;
FIG. 5(B) is a cross-sectional view taken along a line E-E in FIG. 2;
FIG. 6(A) is a cross-sectional view taken along a line F-F in FIG. 2;
FIG. 6(B) is a cross-sectional view taken along a line G-G in FIG. 2;
FIG. 7 is a development view of the tread portion of the embodiment;
FIG. 8 is a plan view of a first inclined groove;
FIG. 9 is a plan view of the first inclined groove;
FIG. 10 is a cross-sectional view taken along a line H-H in FIG. 8; and
FIG. 11 is a plan view of a first small inclined groove.

### DETAILED DESCRIPTION

Hereinafter, an embodiment of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

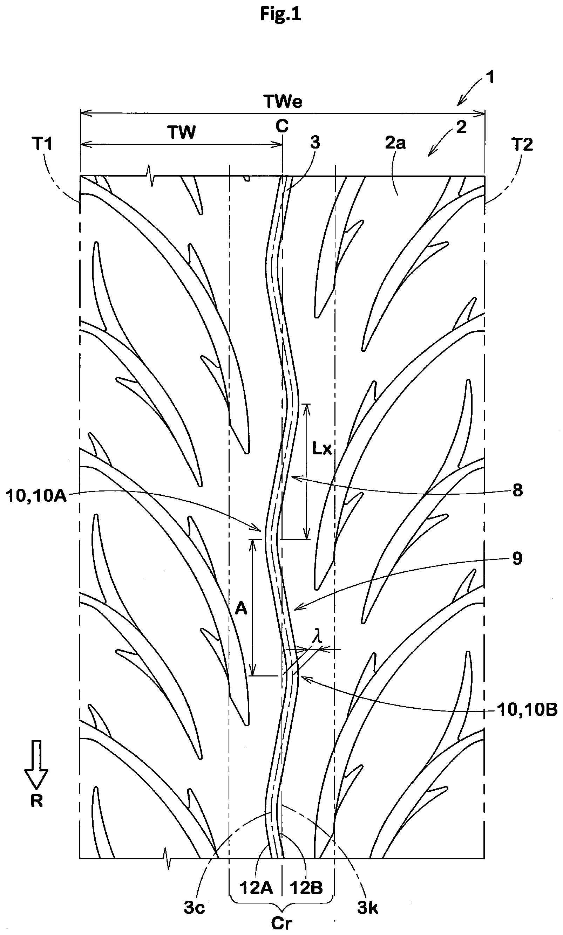

FIG. 1 is a development view of a tread portion 2 of a motorcycle tire (hereinafter sometimes referred to as "tire") 1 showing one embodiment of the present invention. The present invention is used for tires for so-called commuter motorcycles, which are intended for use in urban use (for which comfort and safety are regarded as more important than speed). Such tires mainly have a large opportunity to run at small camber angles. The present invention is also suitably used for bias tires in which carcass cords of a carcass (not shown) extend at an angle of 20 to 60 degrees with respect to the tire circumferential direction.

As shown in FIG. 1, the tread portion 2 includes a first tread end T1 (on the left side in the drawing), a second tread end T2 (on the right side in the drawing), a tread surface 2a between the first tread end T1 and the second tread end T2, and a circumferential groove 3 extending on the tread surface 2a continuously in the circumferential direction. The center in the tire axial direction between the first tread end T1 and the second tread end T2 is a tire equator C.

The first tread end T1 and the second tread end T2 are ends forming a maximum tread width. In the case where the tire 1 has a maximum tread width equal to the total width (maximum width) of the tire 1, the first tread end T1 and the second tread end T2 are the outer ends of the tire 1 in the tire axial direction. In the case where the tire 1 has a maximum tread width smaller than the total width of the tire 1, the first tread end T1 and the second tread end T2 are both ends in the tire axial direction that are in contact with a flat surface when a standardized load is applied to the tire 1 in a standardized state and the tire 1 is brought into contact with the flat surface while being tilted to both sides in the tire axial direction at a camber angle of 30 degrees. The length along the tread surface 2a between the first tread end T1 and the second tread end T2 is a tread development width TWe. In addition, 50% of the tread development width TWe is a tread development half width TW. In the present specification, unless otherwise specified, dimensions and the like of components of the tire 1 are values measured in the standardized state. The "standardized state" is a state where the tire 1 is fitted on a standardized rim (not shown) and adjusted to have a standardized internal pressure and no load is applied to the tire 1. The "standardized load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The "standardized rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

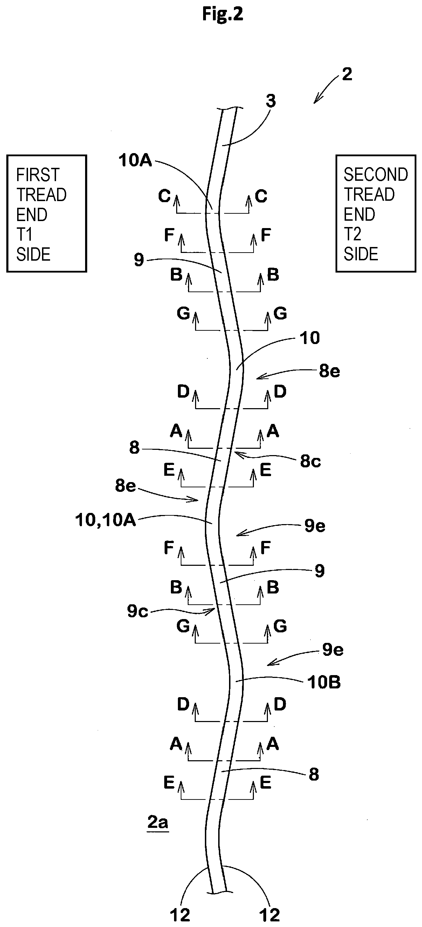

FIG. 2 is a plan view of the circumferential groove 3. As shown in FIG. 2, the circumferential groove 3 includes a plurality of first inclined portions 8 inclined in a first direction with respect to the tire circumferential direction, and a plurality of second inclined portions 9 inclined in a direction opposite to the first direction. Such a circumferential groove 3 has a larger groove volume than, for example, a circumferential groove (not shown) extending in a straight manner in the tire circumferential direction, thereby reducing the amount of water splashing. In addition, the first inclined portions 8 and the second inclined portions 9 angle water splashing to the right and left sides with respect to the traveling direction upon contact with a wet road surface, thereby reducing forward water splashing. Therefore, the circumferential groove 3 of the present embodiment has a basic performance of reducing forward water splashing. In the present embodiment, the first inclined portions 8 are inclined toward the upper right side. In the present embodiment, the second inclined portions 9 are inclined toward the upper left side. In the present embodiment, the first inclined portions 8 and the second inclined portions 9 are alternately arranged in the tire circumferential direction. The first inclined portions 8 may be inclined toward the upper left side, and the second inclined portions 9 may be inclined toward the upper right side.

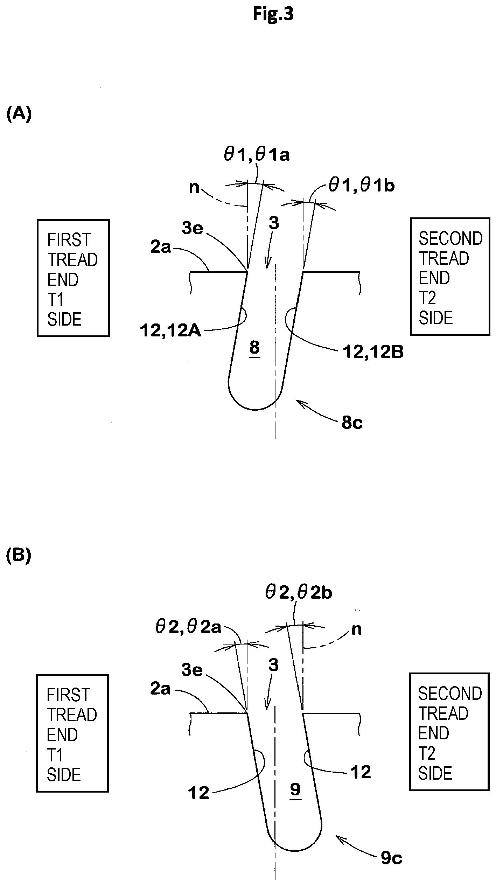

The circumferential groove 3 includes a pair of groove walls 12 extending inward in the tire radial direction from the tread surface 2a. FIG. 3(A) is a cross-sectional view taken along a line A-A in FIG. 2. FIG. 3(A) shows a groove cross-section in the tire meridional direction of each of the plurality of first inclined portions 8. As shown in FIG. 3(A), in each of the plurality of first inclined portions 8, each of the pair of groove walls 12 is inclined toward the first tread end T1 side with respect to a tread normal line n at a groove edge 3e while extending inward in the tire radial direction. FIG. 3(B) is a cross-sectional view taken along a line B-B in FIG. 2. FIG. 3(B) shows a groove cross-section in the tire meridional direction of each of the plurality of second inclined portions 9. As shown in FIG. 3(B), in each of the plurality of second inclined portions 9, each of the pair of groove walls 12 is inclined toward the second tread end T2 side with respect to a tread normal line n at the groove edge 3e while extending inward in the tire radial direction. Owing to this inclination, water splashing during running on a wet road surface can be further distributed to the right and left sides. Furthermore, the first inclined portions 8 and the second inclined portions 9 each have a portion whose inclination angle with respect to the tire circumferential direction increases as the wear of the tread portion 2 progresses. Accordingly, in the end stage of wear in which the groove volume becomes small, water splashing is caused at a larger angle with respect to the traveling direction, so that forward water splashing can be suppressed over a long period of time.

As shown in FIG. 1, the tread portion 2 of the present embodiment has a designated tire rotation direction R. The tread portion 2 comes into contact with a road surface from the lower side toward the upper side in the drawing. In addition, in the present embodiment, the tread portion 2 has a profile (not shown) curved in an arc shape that is convex outward in the tire radial direction.

In the present embodiment, the tread portion 2 includes a crown region Cr including the tire equator C. In the present embodiment, the crown region Cr is a region that is in contact with a flat surface when the standardized load is applied to the tire 1 in the standardized state and the tire 1 is brought into contact with the flat surface at a camber angle of 0 degrees, and is a region that is in contact with a road surface mainly during straight running. The "standardized load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The circumferential groove 3 extends in a wavy shape, for example. In the present embodiment, the circumferential groove 3 extends in a sinusoidal shape. Such a circumferential groove 3 makes the flow of water in the circumferential groove 3 smoother than, for example, a circumferential groove extending in a zigzag or pseudo-sinusoidal shape (not shown), thereby reducing the amount of water splashing upon contact with a wet road surface without impairing drainage performance from the tread surface 2a. The sinusoidal shape is not only a sinusoidal wave, but also includes a shape formed by waves having a plurality of different wavelengths and/or a plurality of different amplitudes.

The ratio (λ/A) of an amplitude λ to a half wavelength A of the circumferential groove 3 is preferably not less than 0.04 and further preferably not less than 0.06 and is preferably not greater than 0.12 and further preferably not greater than 0.10. Since the ratio (λ/A) is not greater than 0.12, water splashing upon contact with a wet road surface can be greatly angled to the right and left sides with respect to the traveling direction. Since the ratio (λ/A) is not less than 0.04, the flow of water in the circumferential groove 3 is smoother, so that the amount of the water splashing can be reduced. The amplitude λ and the half wavelength A are specified by a groove center line 3c of the circumferential groove 3. The groove center line 3c is specified by a location on the tread surface 2a in the tire radial direction.

The circumferential groove 3 is located, for example, in the crown region Cr. The circumferential groove 3 is preferably located on the tire equator C. In the present embodiment, a center line 3k of the amplitude of the circumferential groove 3 is located on the tire equator C. Accordingly, the water splashing during straight running, which is running at a relatively high speed, can be suppressed.

The circumferential groove 3 further includes connection portions 10 connecting the first inclined portions 8 and the second inclined portions 9 adjacent to each other in the tire circumferential direction. The connection portions 10 include first connection portions 10A located on the first tread end T1 side. The first connection portions 10A are located, for example, on the first tread end T1 side with respect to the tire equator C. The connection portions 10 also include second connection portions 10B located on the second tread end T2 side. The second connection portions 10B are located, for example, on the second tread end T2 side with respect to the tire equator C.

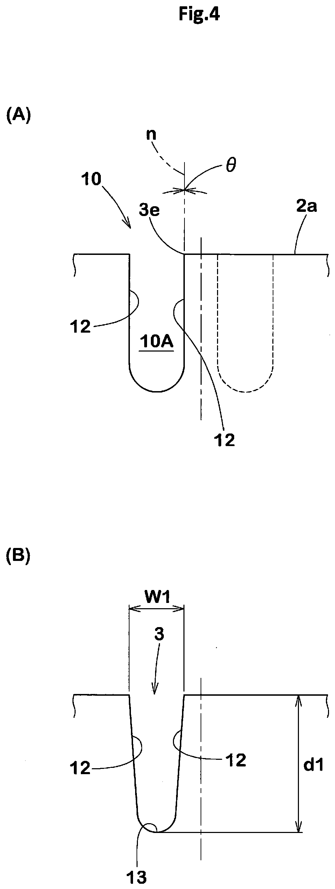

FIG. 4(A) is a cross-sectional view taken along a line C-C in FIG. 2. FIG. 4(A) shows a groove cross-section in the tire meridional direction of each of the multiple connection portions 10. FIG. 4(A) shows a groove cross-section in the tire meridional direction of the first connection portion 10A. As shown in FIG. 4(A), at the connection portion 10, the pair of groove walls 12 extend at an angle θ of 0 degrees with respect to a tread normal line n at the groove edge 3e. At the connection portion 10, the pair of groove walls 12 may extend inward in the tire radial direction in a tapered shape (shown in FIG. 4(B)). Such a connection portion 10 makes the flow of water in the first inclined portion 8 and the second inclined portion 9 smooth, thereby reducing the amount of the water splashing.

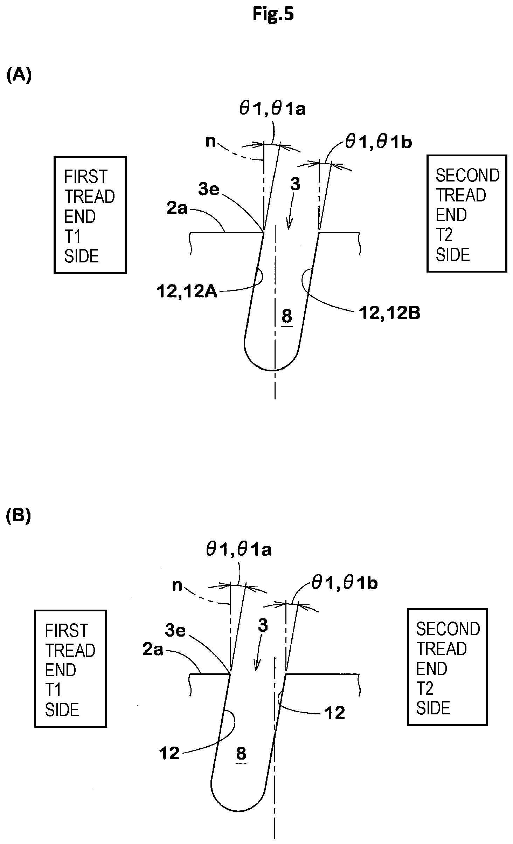

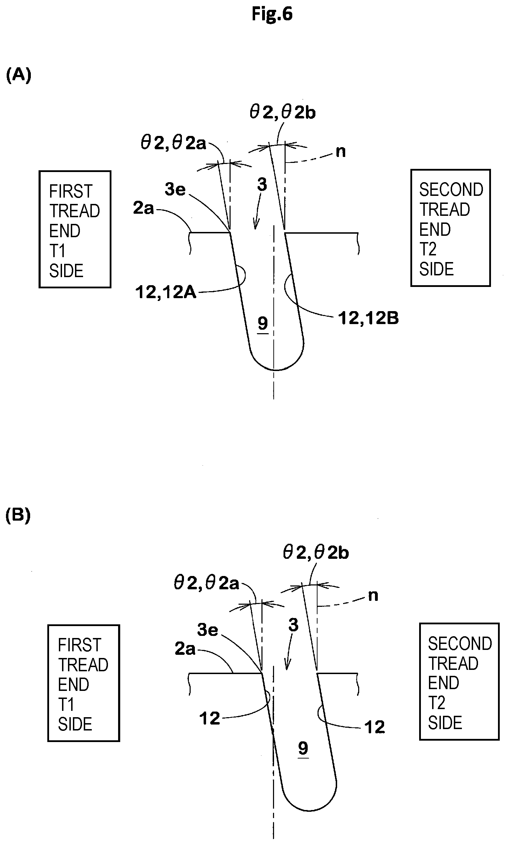

FIG. 5(A) is a cross-sectional view taken along a line D-D in FIG. 2. FIG. 5(B) is a cross-sectional view taken along a line E-E in FIG. 2. FIG. 5(A) and FIG. 5(B) each show a groove cross-section in the tire meridional direction of each of the plurality of first inclined portions 8. The cross-sections shown in FIG. 5(A) and FIG. 5(B) are cross-sections on both end 8e (connection portion 10) sides of the first inclined portion 8 with respect to an intermediate portion 8c (shown in FIG. 2) in the longitudinal direction of the first inclined portion 8. FIG. 6(A) is a cross-sectional view taken along a line F-F in FIG. 2. FIG. 6(B) is a cross-sectional view taken along a line G-G in FIG. 2. FIG. 6(A) and FIG. 6(B) each show a groove cross-section in the tire meridional direction of each of the plurality of second inclined portions 9. The cross-sections shown in FIG. 6(A) and FIG. 6(B) are cross-sections on both end 9e (connection portion 10) sides of the second inclined portion 9 with respect to an intermediate portion 9c (shown in FIG. 2) in the longitudinal direction of the second inclined portion 9.

In each of the plurality of first inclined portions 8, an angle θ1 (shown in FIG. 3(A), FIG. 5(A), and FIG. 5(B)) of each of the pair of groove walls 12 with respect to the tread normal line n is, for example, the same from one end 8e (connection portion 10) side through the intermediate portion 8c to another end 8e (connection portion 10) side of the first inclined portion 8. In addition, in each of the plurality of second inclined portions 9, an angle θ2 (shown in FIG. 3(B), FIG. 6(A), and FIG. 6(B)) of each of the pair of groove walls 12 with respect to the tread normal line n is, for example, the same from one end 9e (connection portion 10) side through the intermediate portion 9c to another end 9e (connection portion 10) side of the second inclined portion 9. Such first inclined portions 8 and second inclined portions 9 decrease the change in the inclination angles of the first inclined portions 8 and the second inclined portions 9 with respect to the tire circumferential direction in the end stage of wear to allow more water to be captured in the circumferential groove 3, thereby suppressing water splashing. In the present specification, the intermediate portion 8c of each first inclined portion 8 refers to a region, within 1/4 of a length Lx in the tire circumferential direction of the first inclined portion 8, centered at the midpoint in the tire circumferential direction of the first inclined portion 8. The intermediate portion 9c of each second inclined portion 9 is also defined in the same manner.

The angle θ1 (shown in FIG. 3(A)) of each of the pair of groove walls 12 with respect to the tread normal line n is maximum at least at the intermediate portion 8c in the longitudinal direction of each of the plurality of first inclined portions 8. In addition, the angle θ2 (shown in FIG. 3(B)) of each of the pair of groove walls 12 with respect to the tread normal line n is maximum at least at the intermediate portion 9c in the longitudinal direction of each of the plurality of second inclined portions 9. Such intermediate portions 8c and 9c effectively exhibit the above-described effects. In the present embodiment, the angle θ of each of the pair of groove walls 12 with respect to the tread normal line n changes between the cross-section along the line E-E and the cross-section along the line F-F adjacent to each other in the tire circumferential direction across the first connection portion 10A. In addition, in the present embodiment, the angle θ of each of the pair of groove walls 12 with respect to the tread normal line n changes between the cross-section along the line G-G and the cross-section along the line D-D adjacent to each other in the tire circumferential direction across the second connection portion 10B.

The maximum values of the angles θ1 and θ2 of each of the pair of groove walls 12 with respect to the tread normal line n are preferably not less than 5 degrees and further preferably not less than 7 degrees, and are preferably not greater than 15 degrees and further preferably not greater than 13 degrees. Since the maximum values of the angles θ1 and θ2 are not less than 5 degrees, water splashing can be caused at a greater angle with respect to the traveling direction in the end stage of wear. Since the maximum values of the angles θ1 and θ2 are not greater than 15 degrees, the change in the stiffness of the tread portion 2 around the circumferential groove 3 can be maintained small. In addition, since the maximum values of the angles θ1 and θ2 are not greater than 15 degrees, damage caused when a mold (not shown) for producing the tire 1 is pulled out can be suppressed.

The pair of groove walls 12 of the circumferential groove 3 include a first groove wall 12A on the first tread end T1 side and a second groove wall 12B on the second tread end T2 side. As shown in FIG. 3(A), FIG. 5(A), and FIG. 5(B), in the transverse cross-section of each first inclined portion 8 along a tire meridian, an angle θ1a of the first groove wall 12A with respect to the tread normal line n is preferably the same (same absolute value) as an angle θ1b of the second groove wall 12B with respect to the tread normal line n. In addition, as shown in FIG. 3(B), FIG. 6(A), and FIG. 6(B), in the transverse cross-section of each second inclined portion 9 along a tire meridian, an angle θ2a of the first groove wall 12A with respect to the tread normal line n is preferably the same (same absolute value) as an angle θ2b of the second groove wall 12B with respect to the tread normal line n. In the transverse cross-section of each first inclined portion 8, the fact that the angles are the same includes not only the case where the absolute value |θ1a - θ1b| of the difference between the angle 61a of the first groove wall 12A and the angle θ1b of the second groove wall 12B is 0 degrees, but also the case where the absolute value |θ1a - θ1b| is not greater than 3 degrees. Also, in the transverse cross-section of each second inclined portion 9, the fact that the angles are the same includes not only the case where the absolute value |θ2a - θ2b| of the difference between the angle θ2a of the first groove wall 12A and the angle θ2b of the second groove wall 12B is 0 degrees, but also the case where the absolute value |θ2a - θ2b| is not greater than 3 degrees. In the transverse cross-section of each first inclined portion 8 along the tire meridian, the first groove wall 12A and the tread surface 2a form an acute angle, and the second groove wall 12B and the tread surface 2a form an obtuse angle. In the transverse cross-section of each second inclined portion 9 along the tire meridian, the first groove wall 12A and the tread surface 2a form an obtuse angle, and the second groove wall 12B and the tread surface 2a form an acute angle.

As shown in FIG. 4(B), the circumferential groove 3 further includes a groove bottom portion 13 connected to the pair of groove walls 12. The pair of groove walls 12 extend in a straight manner, for example. The straight manner includes not only extending straight in the groove cross-section in the tire meridional direction, but also extending in an arc (not shown) having a radius of curvature of 100 mm or more. The groove bottom portion 13 includes a groove bottom having a maximum groove depth, and is formed in an arc shape, for example. Such a groove bottom portion 13 makes the flow of water in the circumferential groove 3 smoother, and also distributes stress generated at the groove bottom, thereby suppressing occurrence of groove bottom cracking. In the present embodiment, the arc shape includes not only an arc having a single radius of curvature, but also a shape formed by an arc forming the groove bottom and a pair of arcs connecting this arc and the respective groove walls 12 and having a smaller radius of curvature than the arc at the groove bottom (not shown). The arc forming the groove bottom may be straight.

A groove width W1 of such a circumferential groove 3 is, for example, preferably not less than 2% and further preferably not less than 3% of the tread development half width TW, and is preferably not greater than 7% and further preferably not greater than 6% of the tread development half width TW. A groove depth d1 of the circumferential groove 3 is, for example, preferably not less than 1.1 times and further preferably not less than 1.5 times the groove width W1, and is preferably not greater than 3.5 times and further preferably not greater than 3.0 times the groove width W1.

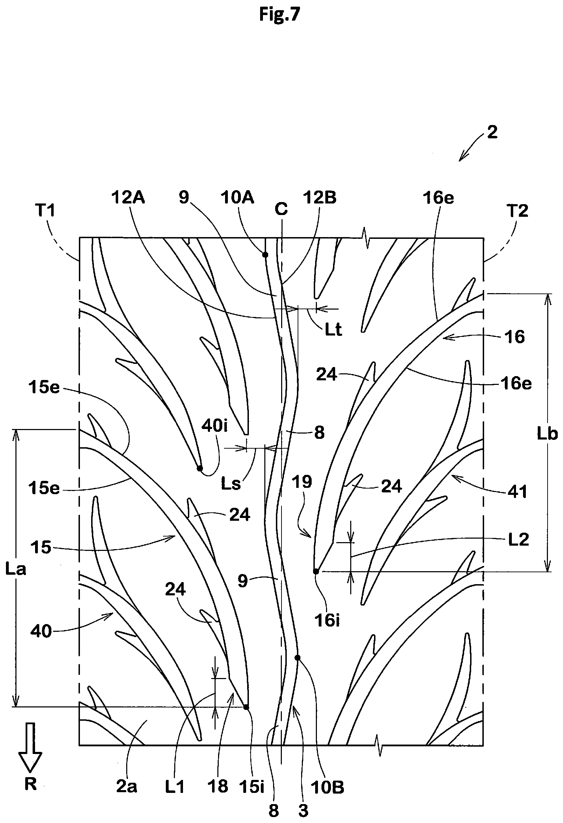

FIG. 7 is a development view of the tread portion 2 of the present embodiment. As shown in FIG. 7, in the present embodiment, the tread portion 2 is further provided with a plurality of first inclined grooves 15 and a plurality of second inclined grooves 16. In addition, the tread portion 2 is provided with a plurality of first small inclined grooves 40 and a plurality of second small inclined grooves 41. The respective inclined grooves 15 and 16 and the respective small inclined grooves 40 and 41 can angle water splashing upon contact with a wet road surface with respect to the traveling direction.

Each first inclined groove 15 has an inner end 15i, separated from the circumferential groove 3, on the first tread end T1 side of the circumferential groove 3. The inner end 15i is, for example, the inner most end in the tire axial direction of the first inclined groove 15. Each first inclined groove 15 extends, for example, from the inner end 15i to the first tread end T1 side. In addition, each second inclined groove 16 has an inner end 16i, separated from the circumferential groove 3, on the second tread end T2 side of the circumferential groove 3. The inner end 16i is, for example, the innermost end in the tire axial direction of the second inclined groove 16. Each second inclined groove 16 extends, for example, from the inner end 16i to the second tread end T2 side. In the present embodiment, each of the plurality of first inclined grooves 15 extends continuously to the first tread end T1 side while extending toward the trailing edge side in the tire rotation direction R. In the present embodiment, each of the plurality of second inclined grooves 16 extends continuously to the second tread end T2 side while extending toward the trailing edge side in the tire rotation direction R. Such first inclined grooves 15 and second inclined grooves 16 allow water to be drained smoothly using the rotation of the tire 1. In addition, the first inclined grooves 15 and the second inclined grooves 16 are each formed in a curved shape that is convex on the trailing edge side in the tire rotation direction R.

The respective inner ends 15i of the plurality of first inclined grooves 15 are located, for example, on the first tread end T1 side with respect to the first connection portions 10A. In addition, the respective inner ends 16i of the second inclined grooves 16 are located on the second tread end T2 side with respect to the multiple second connection portions 10B in the present embodiment. Accordingly, an excessive decrease in the stiffness of the tread portion 2 is suppressed, so that occurrence of uneven wear can be suppressed. In addition, the split position of the mold (not shown) for producing the tire 1 can be located between the circumferential groove 3 and the first inclined grooves 15 or the second inclined grooves 16, so that groove bottom cracking (not shown) which tends to occur due to the split position intersecting the grooves can be suppressed. Although not particularly limited, a length Ls in the tire axial direction between the inner end 15i and the first connection portion 10A (groove edge 3e) is preferably not less than 5% and further preferably not less than 7% of the tread development half width TW, and is preferably not greater than 15% and further preferably not greater than 13% of the tread development half width TW. In addition, a length Lt in the tire axial direction between the inner end 16i and the second connection portion 10B (groove edge 3e) is preferably not less than 5% and further preferably not less than 7% of the tread development half width TW, and is preferably not greater than 15% and further preferably not greater than 13% of the tread development half width TW.

The respective inner ends 15i of the plurality of first inclined grooves 15 are located adjacent to the plurality of first inclined portions 8 in the tire axial direction. In the present embodiment, each inner end 15i is adjacent to the first inclined portion 8 rather than the second inclined portion 9. As shown in FIG. 3(A), FIG. 5(A), and FIG. 5(B), the pair of groove walls 12 of each first inclined portion 8 are inclined toward the first tread end T1 side while extending inward in the tire radial direction. Accordingly, since each inner end 15i is adjacent to the first inclined portion 8, it is easier for the tread surface 2a of the tread portion 2 between the first inclined portion 8 and the inner end 15i to move, and the load generated at the inner end 15i can be distributed and reduced, so that occurrence of local wear can be suppressed. In addition, wear of the tread surface 2a adjacent to the second groove wall 12B on the second tread end T2 side of the first inclined portion 8 is promoted due to concentration of a load thereon. Therefore, the difference between the amounts of wear on both sides in the tire axial direction of the first inclined portion 8 is reduced, so that uneven wear resistance can be improved.

The respective inner ends 16i of the plurality of second inclined grooves 16 are located adjacent to the plurality of second inclined portions 9 in the tire axial direction. In the present embodiment, each inner end 16i is adjacent to the second inclined portion 9 rather than the first inclined portion 8. As shown in FIG. 3(B), FIG. 6(A), and FIG. 6(B), the pair of groove walls 12 of each second inclined portion 9 are inclined toward the second tread end T2 side while extending inward in the tire radial direction. Accordingly, as described above, the difference between the amounts of wear of the tread surface 2a on both sides of the second inclined portion 9 is reduced.

Each of the plurality of first inclined grooves 15 includes a pair of groove edges 15e extending in the longitudinal direction of the first inclined groove 15. The pair of groove edges 15e include a tapered portion 18 in which the pair of groove edges 15e extend in a tapered shape toward the inner end 15i. Such a tapered portion 18 can smoothly guide a water film on the tread surface 2a into the first inclined groove 15. A length L1 in the tire circumferential direction of each tapered portion 18 is preferably not less than 5% and further preferably not less than 7% of a length La in the tire circumferential direction of the first inclined groove 15, and is preferably not greater than 13% and further preferably not greater than 11% of the length La.

Each of the plurality of second inclined grooves 16 includes a pair of groove edges 16e extending in the longitudinal direction of the second inclined groove 16. The pair of groove edges 16e include a tapered portion 19 in which the pair of groove edges 16e extend in a tapered shape toward the inner end 16i. The tapered portion 19 exhibits the same effect as the tapered portions 18 of the first inclined grooves 15. A length L2 in the tire circumferential direction of each tapered portion 19 is preferably not less than 5% and further preferably not less than 7% of a length Lb in the tire circumferential direction of the second inclined groove 16, and is preferably not greater than 13% and further preferably not greater than 11% of the length Lb.

In the present embodiment, the second inclined grooves 16 each have the same shape as a shape obtained by inverting the first inclined groove 15 (line-symmetrical shape). Therefore, in the present specification, the first inclined grooves 15 will be described as a representative, and for the second inclined grooves 16, the configuration different from that of the first inclined grooves 15 will be described.

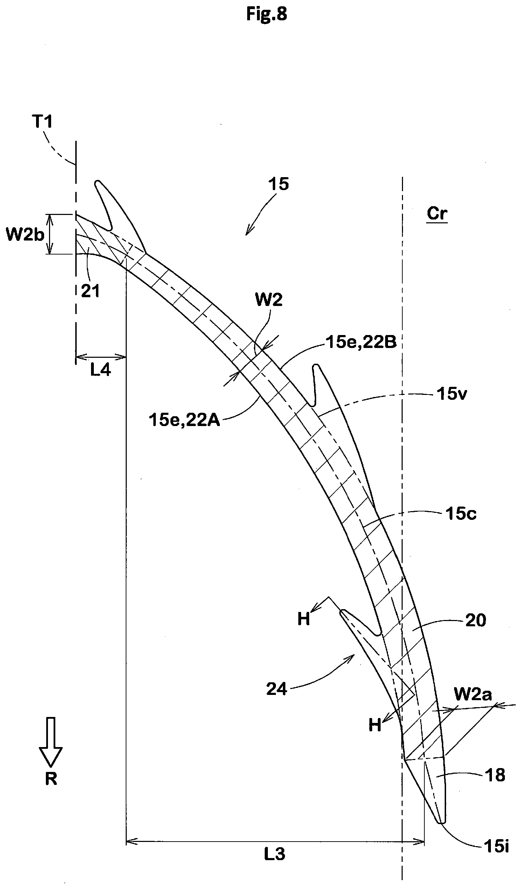

FIG. 8 is a plan view of the first inclined groove 15. As shown in FIG. 8, each of the plurality of first inclined grooves 15 includes a first portion 20 in which a groove width W2 decreases from the crown region Cr toward the first tread end T1 side, and a second portion 21 in which the groove width W2 increases toward the first tread end T1, up to the first tread end T1. The first portion 20 reduces the amount of slippage on the outer side in the tire axial direction, where the amount of slippage tends to be larger, and decreases the difference between the amounts of wear occurring at both groove edges 15e of the first portion 20, thereby improving uneven wear resistance. During running on a wet road surface where the camber angle becomes smaller, a decrease in the groove width W2 of the first inclined groove 15 is suppressed in the region in contact with the road surface, so that wet performance can be maintained. In addition, the second portion 21 makes drainage from the first tread end T1 smooth, so that wet performance can be maintained.

Each first inclined groove 15 of the present embodiment is formed by the first portion 20, the second portion 21, and the tapered portion 18 (not hatched). The groove width W2 is a length in a direction orthogonal to a groove center line 15c of the first inclined groove 15. In addition, in the case where a groove having a smaller groove depth than the first inclined groove 15, a slit, or the like is connected to the first inclined groove 15, the groove width W2 is measured at a virtual groove edge 15v obtained by filling the smaller groove, the slit, or the like, at the location where the smaller groove, the slit, or the like is formed. In FIG. 8, for convenience, the first portion 20 and the second portion 21 are shown by hatching with different directions. The virtual groove edge 15v is shown by an alternate long and two short dashes line.

A length L3 in the tire axial direction of the first portion 20 is preferably not less than 50% and further preferably not less than 55% of the tread development half width TW, and is preferably not greater than 75% and further preferably not greater than 70% of the tread development half width TW. Since the length L3 of the first portion 20 is not less than 50% of the tread development half width TW, an effect of improving uneven wear resistance is exhibited. Since the length L3 of the first portion 20 is not greater than 75% of the tread development half width TW, an excessive decrease in flow of water in the first inclined groove 15 is suppressed.

A length L4 in the tire axial direction of the second portion 21 is preferably not less than 5% and further preferably not less than 7% of the tread development half width TW, and is preferably not greater than 15% and further preferably not greater than 13% of the tread development half width TW. Since the length L4 of the second portion 21 is not less than 5% of the tread development half width TW, smooth drainage is enabled. Since the length L4 of the second portion 21 is not greater than 15% of the tread development half width TW, an excessive decrease in the stiffness around the first tread end T1 is suppressed, and the amount of slippage is inhibited from becoming excessively large.

In order to improve uneven wear resistance while maintaining wet performance, a maximum value W2a of the groove width W2 of the first portion 20 is preferably not less than 5% and further preferably not less than 7% of the tread development half width TW, and is preferably not greater than 15% and further preferably not greater than 13% of the tread development half width TW. In addition, a maximum value W2b of the groove width W2 of the second portion 21 is preferably not less than 80% and further preferably not less than 90% of the maximum value W2a of the groove width W2 of the first portion 20, and is preferably not greater than 120% and further preferably not greater than 110% of the maximum value W2a.

The pair of groove edges 15e include a leading-edge-side inclined groove edge 22A located on the leading edge side in the tire rotation direction R, and a trailing-edge-side inclined groove edge 22B located on the trailing edge side in the tire rotation direction R. In the present specification, the leading-edge-side inclined groove edge 22A and the trailing-edge-side inclined groove edge 22B each include the virtual groove edge 15v and extend continuously between the inner end 15i and the first tread end T1.

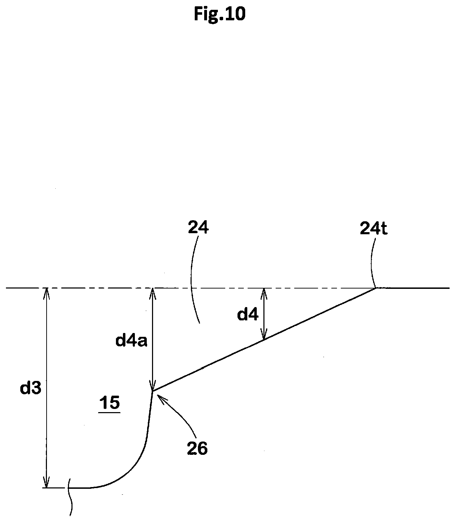

The tread portion 2 includes at least one shallow groove 24 connected to each first inclined groove 15. Such a shallow groove 24 removes a water film on the tread surface 2a to enhance contactability with a road surface, and also suppresses a decrease in the stiffness of the tread portion 2, so that wet performance is improved and uneven wear resistance is maintained high. The shallow groove 24 is formed with a groove depth d4 (shown in FIG. 10) smaller than a groove depth d3 of the first inclined groove 15.

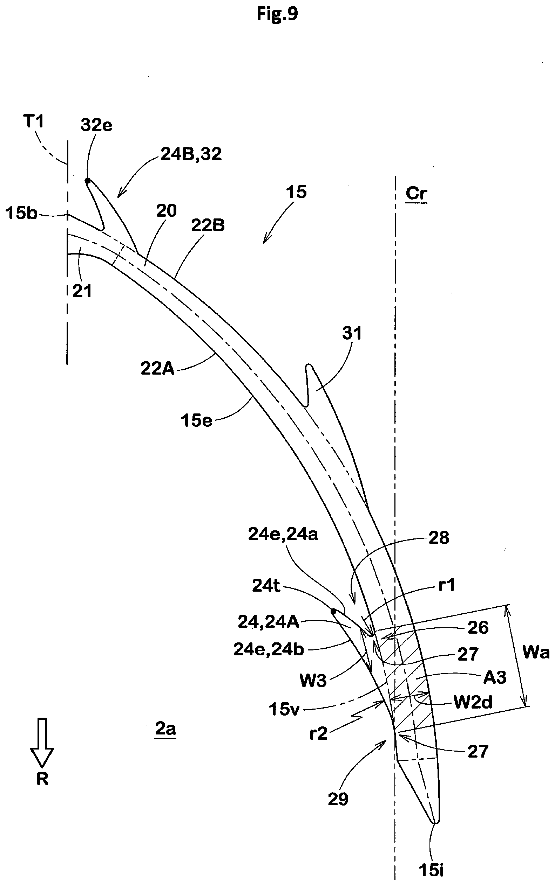

FIG. 9 is a plan view of the first inclined groove 15. As shown in FIG. 9, the shallow groove 24 includes an opening 26 connected to the first inclined groove 15. Water in the shallow groove 24 flows through the opening 26 into the first inclined groove 15 and is drained to the outside of the tread surface 2a during running. The opening 26 is at a position overlapping the virtual groove edge 15v.

The shallow groove 24 includes a pair of groove edges 24e connected to the groove edge 15e of the first inclined groove 15. In the present embodiment, at least one of the pair of groove edges 24e is formed in a curved shape that is convex on the trailing edge side in the tire rotation direction R.

The tread surface 2a of the tread portion 2 includes an acute angle portion 28 sandwiched between one of the groove edges 15e of the first inclined groove 15 and one of the pair of groove edges 24e of the shallow groove 24. Then, at the acute angle portion 28, the groove edge 15e and the groove edge 24e are connected by an arc 27. Accordingly, the load applied to the portion where the first inclined groove 15 and the shallow groove 24 are connected is distributed, so that uneven wear resistance is improved. At the acute angle portion 28, a radius of curvature r1 of the arc 27 is preferably not less than 0.5 mm and further preferably not less than 0.7 mm. Since the radius of curvature r1 is not less than 0.5 mm, uneven wear resistance can be improved. The upper limit value of the radius of curvature r1 of the arc 27 is not particularly limited, and is preferably not greater than 1.5 mm and further preferably not greater than 1.3 mm in consideration of appearance of the pattern design.

The tread surface 2a of the tread portion 2 also includes an obtuse angle portion 29 sandwiched between one of the groove edges 15e of the first inclined groove 15 and one of the pair of groove edges 24e of the shallow groove 24. In addition, at the obtuse angle portion 29, the groove edge 24e is formed by an arc having a radius of curvature r2. The radius of curvature r2 is preferably not less than 20 mm and further preferably not less than 30 mm, and is preferably not greater than 100 mm and further preferably not greater than 90 mm.

The shallow groove 24 extends from the opening 26 toward the first tread end T1 side while extending toward the trailing edge side in the tire rotation direction R. In other words, the pair of groove edges 24e extend from the arc 27 toward the first tread end T1 side while extending toward the trailing edge side in the tire rotation direction R. Such a shallow groove 24 relatively decreases the amount of slippage during running, thereby improving uneven wear resistance. Such a shallow groove 24 also distributes and reduces the load generated around the first inclined groove 15, thereby improving uneven wear resistance. In the present embodiment, the shallow groove 24 has one end 24t terminating at the position on the most trailing edge side in the tire rotation direction R.

The pair of groove edges 24e include a first groove edge 24a located on the trailing edge side in the tire rotation direction R, and a second groove edge 24b located on the leading edge side in the tire rotation direction R. In the present embodiment, the first groove edge 24a defines the acute angle portion 28. In other words, the acute angle portion 28 is located on the trailing edge side in the tire rotation direction R with respect to the shallow groove 24. In addition, the second groove edge 24b defines the obtuse angle portion 29. In other words, the obtuse angle portion 29 is located on the leading edge side in the tire rotation direction R with respect to the shallow groove 24. Accordingly, the above-described effect of relatively decreasing the amount of slippage during running is effectively exhibited.

The shallow groove 24 has a groove width W3 parallel to an opening width Wa of the opening 26. The groove width W3 of the shallow groove 24, for example, decreases with increasing distance from the first inclined groove 15. Accordingly, an excessive decrease in the stiffness of the tread portion 2 (tread surface 2a) is suppressed. In the present specification, the "increasing distance from the first inclined groove 15" is in a direction orthogonal to the opening width Wa.

FIG. 10 is a cross-sectional view taken along a line H-H in FIG. 8. As shown in FIG. 10, the groove depth d4 of the shallow groove 24 decreases with increasing distance from the first inclined groove 15. Accordingly, an excessive decrease in the stiffness of the tread surface 2a is suppressed. The groove depth d4 of the shallow groove 24 is maximum at the opening 26 and minimum at the one end 24t.

A maximum groove depth d4a of the shallow groove 24 is preferably not less than 0.3 times and further preferably not less than 0.4 times the groove depth d3 of the first inclined groove 15 at the position of the opening 26, and is preferably not greater than 0.7 times and further preferably not greater than 0.6 times the groove depth d3 of the first inclined groove 15. Since the maximum groove depth d4a of the shallow groove 24 is not less than 0.3 times the groove depth d3 of the first inclined groove 15, an effect of improving wet performance is exhibited. Since the maximum groove depth d4a of the shallow groove 24 is not greater than 0.7 times the groove depth d3 of the first inclined groove 15, an excessive decrease in the stiffness of the tread portion 2 is suppressed. In the present specification, the first inclined groove 15 at the position of the opening 26 is a region A3 where the first inclined groove 15 intersects a line segment orthogonal to the opening width Wa passing between the pair of groove edges 24e of the shallow groove 24. In FIG. 9, for convenience, the region A3 is shown by hatching.

As shown in FIG. 9, the opening width Wa is preferably not less than 1.0 times and further preferably not less than 1.5 times a groove width W2d of the first inclined groove 15 at the position of the opening 26 (region A3), and is preferably not greater than 4.0 times and further preferably not greater than 3.5 times the groove width W2d of the first inclined groove 15. Since the opening width Wa is not less than 1.0 times the groove width W2d of the first inclined groove 15, an effect of improving wet performance is exhibited. Since the opening width Wa is not greater than 4.0 times the groove width W2d of the first inclined groove 15, an excessive decrease in the stiffness of the tread portion 2 is suppressed.

In the present embodiment, the shallow groove 24 includes a first shallow groove 24A connected to the leading-edge-side inclined groove edge 22A, and a second shallow groove 24B connected to the trailing-edge-side inclined groove edge 22B. In the present embodiment, the first shallow groove 24A is located on the inner end 15i side (leading edge side in the tire rotation direction R) with respect to the second shallow groove 24B. In the present embodiment, the second shallow groove 24B includes an inner second shallow groove 31 located at a position overlapping the first shallow groove 24A in the tire axial direction, and an outer second shallow groove 32 located on the first tread end T1 side with respect to the inner second shallow groove 31. In the present embodiment, the outer second shallow groove 32 is located over the first portion 20 and the second portion 21. In the present embodiment, each shallow groove 24 is located on the first tread end T1 side with respect to the crown region Cr.

One end 32e on the trailing edge side in the tire rotation direction R of the outer second shallow groove 32 is located on the trailing edge side in the tire rotation direction R with respect to one end 15b on the trailing edge side in the tire rotation direction R of the first inclined groove 15. Such an outer second shallow groove 32 serves to collect a larger amount of a water film on the tread surface 2a, in the first inclined groove 15.

As shown in FIG. 7, in the present embodiment, the second small inclined grooves 41 each have the same shape as a shape obtained by inverting the first small inclined groove 40 at the tire equator C (line-symmetrical shape). Therefore, in the present specification, the first small inclined grooves 40 will be described as a representative, and for the second small inclined grooves 41, the configuration different from that of the first small inclined grooves 40 will be described.

Each first small inclined groove 40 has an inner end 40i located on the first tread end T1 side with respect to the inner end 15i of the first inclined groove 15, and is open at the first tread end T1. The first small inclined groove 40 extends toward the first tread end T1 side while extending toward the trailing edge side in the tire rotation direction R. In addition, the first small inclined groove 40 is formed, for example, in a curved shape that is convex on the trailing edge side in the tire rotation direction R. Furthermore, each first small inclined groove 40 of the present embodiment is located on the first tread end T1 side with respect to the crown region Cr.

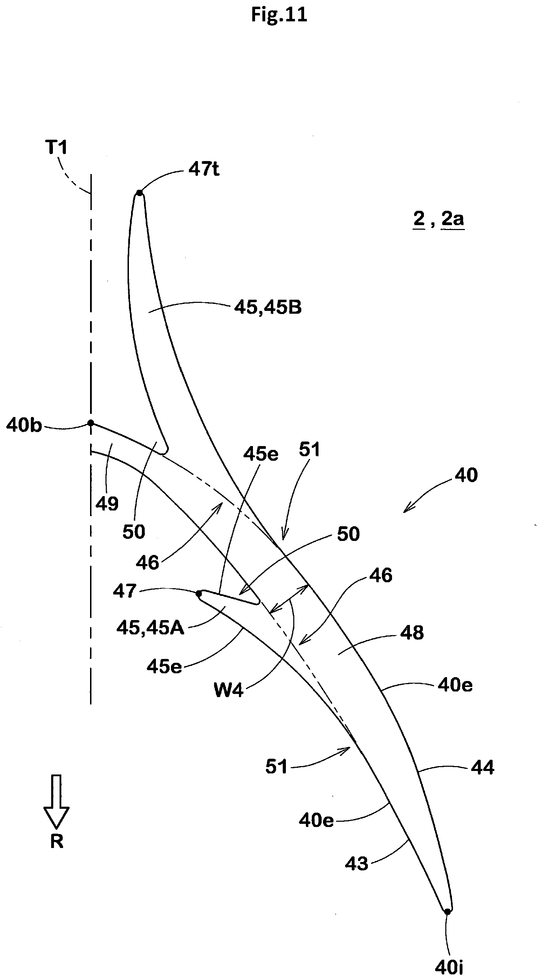

FIG. 11 is a plan view of the first small inclined groove 40. As shown in FIG. 11, the first small inclined groove 40 has, for example, a pair of groove edges 40e extending from the inner end 40i to the first tread end T1. The pair of groove edges 40e include a leading-edge-side small groove edge 43 located on the leading edge side in the tire rotation direction R, and a trailing-edge-side small groove edge 44 located on the trailing edge side in the tire rotation direction R.

In the present embodiment, the first small inclined groove 40 includes a first portion 48 in which a groove width W4 decreases toward the first tread end T1 side, and a second portion 49 in which the groove width W4 increases toward the first tread end T1, up to the first tread end T1. The first portion 48 reduces the amount of slippage on the outer side in the tire axial direction, where the amount of slippage tends to be larger, and decreases the difference between the amounts of wear occurring on both sides in the groove width direction of the first portion 48, thereby improving uneven wear resistance. The second portion 49 makes drainage from the first tread end T1 smooth, so that wet performance can be maintained.

The tread portion 2 also includes at least one small shallow groove 45 connected to each first small inclined groove 40. The small shallow groove 45 is formed with a groove depth smaller than the groove depth (not shown) of the first small inclined groove 40. In the present embodiment, the small shallow groove 45 has an opening 46 connected to the first small inclined groove 40, and one end 47 located on the most trailing edge side in the tire rotation direction R. The small shallow groove 45 extends from the opening 46 toward the first tread end T1 side while extending toward the trailing edge side in the tire rotation direction R.

The tread surface 2a of the tread portion 2 includes an acute angle portion 50 sandwiched between one of the groove edges 40e of the first small inclined groove 40 and one of a pair of groove edges 45e of the small shallow groove 45. The tread surface 2a of the tread portion 2 also includes an obtuse angle portion 51 sandwiched between one of the groove edges 40e of the first small inclined groove 40 and one of the pair of groove edges 45e of the small shallow groove 45. In the present embodiment, the acute angle portion 50 is defined by the groove edge 45e on the trailing edge side in the tire rotation direction R. In the present embodiment, the obtuse angle portion 51 is defined by the groove edge 45e on the leading edge side in the tire rotation direction R.

The small shallow groove 45 includes a first small shallow groove 45A connected to the leading-edge-side small groove edge 43, and a second small shallow groove 45B connected to the trailing-edge-side small groove edge 44. The first small shallow groove 45A is located on the inner end 40i side (leading edge side in the tire rotation direction R) with respect to the second small shallow groove 45B. One end 47t on the trailing edge side in the tire rotation direction R of the second small shallow groove 45B is located on the trailing edge side in the tire rotation direction R with respect to one end 40b on the trailing edge side in the tire rotation direction R of the first small inclined groove 40. Such a second small shallow groove 45B serves to collect a larger amount of a water film on the tread portion 2, in the first small inclined groove 40.

The land ratio of the tread portion 2 is preferably not less than 75% and further preferably not less than 80%, and is preferably not greater than 95% and further preferably not greater than 90%. Since the land ratio is not less than 75% and since the land ratio is not greater than 95%, in the present specification, the land ratio is indicated as the ratio (A2/A1) of an area A2 of the tread surface 2a to an area A1 of a virtual tread surface obtained by filling all grooves on the tread portion 2.

### EXAMPLES

Motorcycle tires having the basic pattern in FIG. 1 were produced as test tires on the basis of specifications in Table 1. Then, the test tires were tested for water splashing suppressing performance, uneven wear resistance, wet performance, and groove bottom cracking resistance. The test methods and common specifications for each test tire are as follows.
Tire size: 100/90-10

### <Water Splashing Suppressing Performance and Wet Performance>

The respective test tires were mounted to the front and rear wheels of a motorcycle. A test rider rode this motorcycle on a test course having a wet road surface. The water splashing suppressing performance was evaluated based on the amount of water splashed on the test rider during riding, and is indicated as a score with the amount of splashed water of Comparative Example 1 as 100. The wet performance was evaluated based on the stability and ease of steering the motorcycle during riding, and is indicated as a score with the score of Comparative Example 1 as 100. The higher the value is, the better the water splashing suppressing performance and the wet performance are. For the water splashing suppressing performance, the test was conducted until the end stage of wear of the circumferential groove.
Internal pressure: 170 kPa (front), 225 kPa (rear)
Motorcycle: scooter having an engine displacement of 100 cc

### <Uneven Wear Resistance>

A test rider rode the above motorcycle on a dry asphalt test course. After the ride, the occurrence state of uneven wear was visually evaluated by a tester. The evaluation is indicated as a score with the occurrence state of uneven wear of Comparative Example 1 as 100. The higher the value is, the better the uneven wear resistance is.

### <Groove Bottom Cracking Resistance>

Each test tire was run on a smooth drum tester based on the durability (ENDURANCE) test specified in the Federal Motor Vehicle Safety Standards (FMVSS 119) of the United States Department of Transportation. After the third step of running, cracking at the groove bottoms of the circumferential groove and each inclined groove were observed by the naked eye of a tester.
The test conditions are as follows.
Drum diameter: 1.7 m
Speed: 80 km/h
Room temperature: 38±3°C

### (Load)

First step: standardized load (running time: 4 hours)
Second step: standardized load×108% (running time: 6 hours)
Third step: standardized load×117% (running time: 24 hours)

The results are shown in Table 1.

In Table 1, "T1" means that the pair of groove walls are inclined toward the first tread end side while extending inward in the tire radial direction, and "T2" means that the pair of groove walls are inclined toward the second tread end side while extending inward in the tire radial direction.

In addition, at θ1a, θ1b, θ2a, and θ2b, an indication with "-" means that the groove wall and the tread surface form an obtuse angle, and an indication without "-" means that the groove wall and the tread surface form an acute angle.

Furthermore, in Table 1, "A" means that each first inclined groove is inclined toward the first tread end side while extending toward the trailing edge side in the tire rotation direction, and "B" means that each first inclined groove is inclined toward the tire equator side while extending toward the trailing edge side in the tire rotation direction.

Also, in Table 1, "Tapered" means the shape shown in FIG. 1, and "Arc" means an arc having a radius of curvature that is 50% of W2a.

Furthermore, in Table 1, "C" means that the tread surface around the circumferential groove is damaged, and "D" means that groove bottom cracking occurs at the split position of the mold.

**[Table 1]**

| | Comp. Ex. 1 | Comp. Ex. 2 | Ex. 1 | Ex. 2 | Ex. 3 | Ex. 4 | Ex. 5 | Ex. 6 |
|---|---|---|---|---|---|---|---|---|
| Shape of circumferential groove | Straight | FIG. 2 | FIG. 2 | FIG. 2 | FIG. 2 | FIG. 2 | FIG. 2 | FIG. 2 |
| Inclination of pair of groove walls at first inclined portion | None | None | T1 | T1 | T1 | T1 | T1 | T1 |
| Inclination of pair of groove walls at second inclined portion | None | None | T2 | T2 | T2 | T2 | T2 | T2 |
| θ1a, θ1b (degrees) | 0, 0 | 0, 0 | 5, -5 | 10, -10 | 15, -15 | 5, -5 | 5, -5 | 5, -5 |
| θ2a, θ2b (degrees) | 0, 0 | 0, 0 | -5, 5 | -10, 10 | -15, 15 | -5, 5 | -5, 5 | -5, 5 |
| Inclination angles θ of pair of groove walls at connection portion (degrees) | 0 | 0 | 0 | 0 | 0 | 0 | 0 | 0 |
| Ls/TW and Lt/TW (%) | 12 | 12 | 12 | 12 | 12 | 0 | 50 | 50 |
| Shape including inner end of first inclined groove | Tapered | Tapered | Tapered | Tapered | Tapered | Tapered | Arc | Tapered |
| Direction of inclination of first inclined grooves | A | A | A | A | A | A | A | B |
| Water splashing suppressing performance [score: higher value is better] | 100 | 110 | 110 | 115 | 115 | 120 | 120 | 125 |
| Uneven wear resistance [score: higher value is better] | 100 | 95 | 105 | 105 | 105 | 105 | 105 | 100 |
| Wet performance [score: higher value is better] | 100 | 100 | 100 | 105 | 105 | 110 | 105 | 110 |
| Groove bottom cracking resistance [presence or absence, others] | Minute | Absence | Absence | Minute | Small/C | Absence | Absence | Small/D |

As a result of the tests, it is understood that the tire of each Example has better water splashing suppressing performance than the tire of each Comparative Example. It is also confirmed that the tire of each Example has high uneven wear resistance, wet performance, and groove bottom cracking resistance.

## Claims

1. A motorcycle tire (1) comprising a tread portion (2), wherein
the tread portion (2) includes a first tread end (T1), a second tread end (T2), a tread surface (2a) between the first tread end (T1) and the second tread end (T2), and a circumferential groove (3) extending on the tread surface (2a) continuously in a tire circumferential direction,
the circumferential groove (3) includes a plurality of first inclined portions (8) inclined in a first direction with respect to the tire circumferential direction, and a plurality of second inclined portions (9) inclined in a direction opposite to the first direction, and
the circumferential groove (3) includes a pair of groove walls (12) extending inward in a tire radial direction from the tread surface (2a),
**characterized in that** in a groove cross-section in a tire meridional direction of each of the plurality of first inclined portions (8), each of the pair of groove walls (12) is inclined toward the first tread end side with respect to a tread normal line (n) at a groove edge (3e) while extending inward in the tire radial direction, and
in a groove cross-section in the tire meridional direction of each of the plurality of second inclined portions (9), each of the pair of groove walls (12) is inclined toward the second tread end side with respect to a tread normal line (n) at the groove edge (3e) while extending inward in the tire radial direction.

2. The motorcycle tire (1) according to claim 1, wherein
the circumferential groove (3) further includes connection portions (10) connecting the first inclined portions (8) and the second inclined portions (9) adjacent to each other in the tire circumferential direction, and
in a groove cross-section in the tire meridional direction of each of the connection portions (10), the pair of groove walls (12) extend inward in the tire radial direction at 0 degrees with respect to a tread normal line (n) at the groove edge (3e) or in a tapered shape.

3. The motorcycle tire (1) according to claim 1 or 2, wherein the circumferential groove (3) is located on a tire equator (C).

4. The motorcycle tire (1) according to any one of claims 1 to 3, wherein an angle (θ) of each of the pair of groove walls (12) with respect to the tread normal line (n) is maximum at an intermediate portion (8c) in a longitudinal direction of each of the plurality of first inclined portions (8), or is maximum at an intermediate portion (9c) in a longitudinal direction of each of the plurality of second inclined portions (9).

5. The motorcycle tire (1) according to claim 4, wherein a maximum value of the angle (θ) of each of the pair of groove walls (12) with respect to the tread normal line (n) is 5 to 15 degrees.

6. The motorcycle tire (1) according to claim 4 or 5, wherein
in each of the plurality of first inclined portions (8), an angle (θ1) of each of the pair of groove walls (12) with respect to the tread normal line (n) continuously decreases from the intermediate portion (8c) in the longitudinal direction of the first inclined portion (8) toward both ends (8e) of the first inclined portion (8), or
in each of the plurality of second inclined portions (9), an angle (θ2) of each of the pair of groove walls (12) with respect to the tread normal line (n) continuously decreases from the intermediate portion (9c) in the longitudinal direction of the second inclined portion (9) toward both ends (9e) of the second inclined portion (9).

7. The motorcycle tire (1) according to any one of claims 1 to 6, wherein
the tread portion (2) is further provided with a plurality of first inclined grooves (15) which extend from inner ends (15i) thereof separated from the circumferential groove (3) toward the first tread end side, on the first tread end side of the circumferential groove (3), and
the respective inner ends (15i) of the plurality of first inclined grooves (15) are located adjacent to the plurality of first inclined portions (8) in a tire axial direction.

8. The motorcycle tire (1) according to claim 7, wherein
the circumferential groove (3) further includes connection portions (10) connecting the first inclined portions (8) and the second inclined portions (9) adjacent to each other in the tire circumferential direction,
the connection portions (10) include first connection portions (10A) located on the first tread end side, and
the respective inner ends (15i) of the plurality of first inclined grooves (15) are located on the first tread end side with respect to the first connection portions (10A).

9. The motorcycle tire (1) according to claim 7 or 8, wherein
each of the plurality of first inclined grooves (15) includes a pair of groove edges (15e) extending in a longitudinal direction of the first inclined groove (15), and
the pair of groove edges (15e) include a tapered portion (18) in which the pair of groove edges (15e) extend in a tapered shape toward the inner end (15i).

10. The motorcycle tire (1) according to any one of claims 7 to 9, wherein
the tread portion (2) is further provided with a plurality of second inclined grooves (16) which extend from inner ends (16i) thereof separated from the circumferential groove (3) toward the second tread end side, on the second tread end side of the circumferential groove (3), and
the respective inner ends (16i) of the plurality of second inclined grooves (16) are located adjacent to the plurality of second inclined portions (9) in the tire axial direction.

11. The motorcycle tire (1) according to claim 10, wherein
the circumferential groove (3) further includes connection portions (10) connecting the first inclined portions (8) and the second inclined portions (9) adjacent to each other in the tire circumferential direction,
the connection portions (10) include second connection portions (10B) located on the second tread end side, and
the respective inner ends (16i) of the plurality of second inclined grooves (16) are located on the second tread end side with respect to the second connection portions (10B).

12. The motorcycle tire (1) according to claim 10 or 11, wherein
each of the plurality of second inclined grooves (16) includes a pair of groove edges (16e) extending in a longitudinal direction of the second inclined groove (16), and
the pair of groove edges (16e) include a tapered portion in which the pair of groove edges (16e) extend in a tapered shape toward the inner end (16i).

## Patentansprüche

1. Motorradreifen (1), der einen Laufflächenabschnitt (2) umfasst, wobei
der Laufflächenabschnitt (2) ein erstes Laufflächenende (T1), ein zweites Laufflächenende (T2), eine Laufflächen-Oberfläche (2a) zwischen dem ersten Laufflächenende (T1) und dem zweiten Laufflächenende (T2) und eine Umfangsrille (3) umfasst, die sich auf der Laufflächen-Oberfläche (2a) kontinuierlich in einer Reifenumfangsrichtung erstreckt,
die Umfangsrille (3) eine Vielzahl von ersten geneigten Abschnitten (8), die in einer ersten Richtung in Bezug auf die Reifenumfangsrichtung geneigt sind, und eine Vielzahl von zweiten geneigten Abschnitten (9) umfasst, die in einer Richtung entgegengesetzt zu der ersten Richtung geneigt sind, und
die Umfangsrille (3) ein Paar Rillenwände (12) umfasst, die sich in einer Reifenradialrichtung von der Laufflächen-Oberfläche (2a) nach innen erstrecken,
**dadurch gekennzeichnet, dass** in einem Rillenquerschnitt in einer Reifenmeridionalrichtung jedes der Vielzahl von ersten geneigten Abschnitten (8) jede des Paares Rillenwände (12) in Richtung der Seite des ersten Laufflächenendes in Bezug auf eine Laufflächen-Normallinie (n) an einer Rillenkante (3e) geneigt ist, während sie sich in der Reifenradialrichtung nach innen erstreckt, und
in einem Rillenquerschnitt in der Reifenmeridionalrichtung jedes der Vielzahl von zweiten geneigten Abschnitten (9) jede des Paares Rillenwände (12) in Richtung der Seite des zweiten Laufflächenendes in Bezug auf eine Laufflächen-Normallinie (n) an der Rillenkante (3e) geneigt ist, während sie sich in der Reifenradialrichtung nach innen erstreckt.

2. Motorradreifen (1) nach Anspruch 1, wobei
die Umfangsrille (3) ferner Verbindungsabschnitte (10) umfasst, die die ersten geneigten Abschnitte (8) und die zweiten geneigten Abschnitte (9) verbinden, die in der Reifenumfangsrichtung benachbart zueinander sind, und
in einem Rillenquerschnitt in der Reifenmeridionalrichtung jedes der Verbindungsabschnitte (10) sich das Paar Rillenwände (12) in der Reifenradialrichtung mit 0 Grad in Bezug auf eine Laufflächen-Normallinie (n) an der Rillenkante (3e) oder in einer sich verjüngenden Form nach innen erstreckt.

3. Motorradreifen (1) nach Anspruch 1 oder 2, wobei die Umfangsrille (3) auf einem Reifenäquator (C) angeordnet ist.

4. Motorradreifen (1) nach einem der Ansprüche 1 bis 3, wobei ein Winkel (θ) jeder des Paares Rillenwände (12) in Bezug auf die Laufflächen-Normallinie (n) an einem Zwischenabschnitt (8c) in einer Längsrichtung jedes der Vielzahl von ersten geneigten Abschnitten (8) maximal ist oder an einem Zwischenabschnitt (9c) in einer Längsrichtung jedes der Vielzahl von zweiten geneigten Abschnitten (9) maximal ist.

5. Motorradreifen (1) nach Anspruch 4, wobei ein Maximalwert des Winkels (θ) jeder des Paares Rillenwände (12) in Bezug auf die Laufflächen-Normallinie (n) 5 bis 15 Grad beträgt.

6. Motorradreifen (1) nach Anspruch 4 oder 5, wobei
in jedem der Vielzahl von ersten geneigten Abschnitten (8) ein Winkel (θ1) jeder des Paares Rillenwände (12) in Bezug auf die Laufflächen-Normallinie (n) von dem Zwischenabschnitt (8c) in der Längsrichtung des ersten geneigten Abschnitts (8) in Richtung beider Enden (8e) des ersten geneigten Abschnitts (8) kontinuierlich abnimmt, oder
in jedem der Vielzahl von zweiten geneigten Abschnitten (9) ein Winkel (θ2) jeder des Paares Rillenwände (12) in Bezug auf die Laufflächen-Normallinie (n) von dem Zwischenabschnitt (9c) in der Längsrichtung des zweiten geneigten Abschnitts (9) in Richtung beider Enden (9e) des zweiten geneigten Abschnitts (9) kontinuierlich abnimmt.

7. Motorradreifen (1) nach einem der Ansprüche 1 bis 6, wobei
der Laufflächenabschnitt (2) ferner mit einer Vielzahl von ersten geneigten Rillen (15) versehen ist, die sich von inneren Enden (15i) desselben, die von der Umfangsrille (3) getrennt sind, in Richtung der Seite des ersten Laufflächenendes auf der Seite des ersten Laufflächenendes der Umfangsrille (3) erstrecken, und
die jeweiligen inneren Enden (15i) der Vielzahl von ersten geneigten Rillen (15) benachbart zu der Vielzahl von ersten geneigten Abschnitten (8) in einer Reifenaxialrichtung angeordnet sind.

8. Motorradreifen (1) nach Anspruch 7, wobei
die Umfangsrille (3) ferner Verbindungsabschnitte (10) umfasst, die die ersten geneigten Abschnitte (8) und die zweiten geneigten Abschnitte (9) verbinden, die in der Reifenumfangsrichtung benachbart zueinander sind,
die Verbindungsabschnitte (10) erste Verbindungsabschnitte (10A) umfassen, die auf der Seite des ersten Laufflächenendes angeordnet sind, und
die jeweiligen inneren Enden (15i) der Vielzahl von ersten geneigten Rillen (15) auf der Seite des ersten Laufflächenendes in Bezug auf die ersten Verbindungsabschnitte (10A) angeordnet sind.

9. Motorradreifen (1) nach Anspruch 7 oder 8, wobei
jede der Vielzahl von ersten geneigten Rillen (15) ein Paar Rillenkanten (15e) umfasst, die sich in einer Längsrichtung der ersten geneigten Rille (15) erstrecken, und
das Paar Rillenkanten (15e) einen sich verjüngenden Abschnitt (18) umfasst, in dem sich das Paar Rillenkanten (15e) in einer sich verjüngenden Form in Richtung des inneren Endes (15i) erstreckt.

10. Motorradreifen (1) nach einem der Ansprüche 7 bis 9, wobei
der Laufflächenabschnitt (2) ferner mit einer Vielzahl von zweiten geneigten Rillen (16) versehen ist, die sich von inneren Enden (16i) desselben, die von der Umfangsrille (3) getrennt sind, in Richtung der Seite des zweiten Laufflächenendes auf der Seite des zweiten Laufflächenendes der Umfangsrille (3) erstrecken, und
die jeweiligen inneren Enden (16i) der Vielzahl von zweiten geneigten Rillen (16) benachbart zu der Vielzahl von zweiten geneigten Abschnitten (9) in der Reifenaxialrichtung angeordnet sind.

11. Motorradreifen (1) nach Anspruch 10, wobei
die Umfangsrille (3) ferner Verbindungsabschnitte (10) umfasst, die die ersten geneigten Abschnitte (8) und die zweiten geneigten Abschnitte (9) verbinden, die in der Reifenumfangsrichtung benachbart zueinander sind,
die Verbindungsabschnitte (10) zweite Verbindungsabschnitte (10B) umfassen, die auf der Seite des zweiten Laufflächenendes angeordnet sind, und
die jeweiligen inneren Enden (16i) der Vielzahl von zweiten geneigten Rillen (16) auf der Seite des zweiten Laufflächenendes in Bezug auf die zweiten Verbindungsabschnitte (10B) angeordnet sind.

12. Motorradreifen (1) nach Anspruch 10 oder 11, wobei
jede der Vielzahl von zweiten geneigten Rillen (16) ein Paar Rillenkanten (16e) umfasst, die sich in einer Längsrichtung der zweiten geneigten Rille (16) erstrecken, und
das Paar Rillenkanten (16e) einen sich verjüngenden Abschnitt umfasst, in dem sich das Paar Rillenkanten (16e) in einer sich verjüngenden Form in Richtung des inneren Endes (16i) erstreckt.

## Revendications

1. Pneumatique pour motocyclette (1) comprenant une portion formant bande de roulement (2), dans lequel
la portion formant bande de roulement (2) inclut une première extrémité de bande de roulement (T1), une deuxième extrémité de bande de roulement (T2), une surface de bande de roulement (2a) entre la première extrémité de bande de roulement (T1) et la deuxième extrémité de bande de roulement (T2), et une rainure circonférentielle (3) s'étendant en continu sur la surface de bande de roulement (2a) dans une direction circonférentielle du pneumatique,
la rainure circonférentielle (3) inclut une pluralité de premières portions inclinées (8) inclinées dans une première direction par rapport à la direction circonférentielle du pneumatique, et une pluralité de deuxièmes portions inclinées (9) inclinées dans une direction opposée à la première direction, et la rainure circonférentielle (3) inclut une paire de parois de rainure (12) s'étendant vers l'intérieur dans une direction radiale du pneumatique depuis la surface de bande de roulement (2a),
**caractérisé en ce que**, dans une section transversale de rainure dans une direction méridienne du pneumatique de chacune de la pluralité de premières portions inclinées (8), chacune de la paire de parois de rainure (12) est inclinée vers le côté de la première extrémité de bande de roulement par rapport à une ligne normale (n) de bande de roulement au niveau du bord de rainure (3e) tout en s'étendant vers l'intérieur dans la direction radiale du pneumatique, et
dans une section transversale de rainure dans la direction méridienne du pneumatique de chacune de la pluralité de deuxièmes portions inclinées (9), chacune de la paire de parois de rainure (12) est inclinée vers le côté de la deuxième extrémité de bande de roulement par rapport à une ligne normale (n) de bande de roulement au niveau du bord de rainure (3e) tout en s'étendant vers l'intérieur dans la direction radiale du pneumatique.

2. Pneumatique pour motocyclette (1) selon la revendication 1, dans lequel
la rainure circonférentielle (3) inclut en outre des portions de connexion (10) connectant les premières portions inclinées (8) et les deuxièmes portions inclinées (9) adjacentes les unes aux autres dans la première direction circonférentielle du pneumatique, et
dans une section transversale de rainure dans la direction méridienne du pneumatique de chacune des portions de connexion (10), la paire de parois de rainure (12) s'étendent vers l'intérieur dans la direction radiale du pneumatique sous 0 degré par rapport à une ligne normale (n) de bande de roulement au niveau du bord de rainure (3e) ou dans une forme effilée.

3. Pneumatique pour motocyclette (1) selon la revendication 1 ou 2, dans lequel la rainure circonférentielle (3) est située sur un équateur de pneumatique (C).

4. Pneumatique pour motocyclette (1) selon l'une quelconque des revendications 1 à 3, dans lequel un angle (θ) de chacune de la paire de parois de rainure (12) par rapport à la ligne normale (n) de bande de roulement est maximum au niveau d'une portion intermédiaire (8c) dans une direction longitudinale de chacune de la pluralité de premières portions inclinées (8), ou est maximum au niveau d'une portion intermédiaire (9c) dans une direction longitudinale de chacune de la pluralité de deuxièmes portions inclinées (9).

5. Pneumatique pour motocyclette (1) selon la revendication 4, dans lequel une valeur maximum de l'angle (θ) de chacune de la paire de parois de rainure (12) par rapport à la ligne normale (n) de bande de roulement est de 5 à 15 degrés.

6. Pneumatique pour motocyclette (1) selon la revendication 4 ou 5, dans lequel
dans chacune de la pluralité de premières portions inclinées (8), un angle (θ1) de chacune de la paire de parois de rainure (12) par rapport à la ligne normale (n) de bande de roulement diminue en continu depuis la portion intermédiaire (8c) dans la direction longitudinale de la première portion inclinée (8) vers les deux extrémités (8e) de la première portion inclinée (8), ou
dans chacune de la pluralité de deuxièmes portions inclinées (9), un angle (θ2) de chacune de la paire de parois de rainure (12) par rapport à la ligne normale (n) de bande de roulement diminue en continu depuis la portion intermédiaire (9c) dans la direction longitudinale de la deuxième portion inclinée (9) vers les deux extrémités (9e) de la deuxième portion inclinée (9).

7. Pneumatique pour motocyclette (1) selon l'une quelconque des revendications 1 à 6, dans lequel
la portion formant bande de roulement (2) est en outre pourvue d'une pluralité de premières rainures inclinées (15) qui s'étendent depuis des extrémités intérieures (15i) de celles-ci à distance de la rainure circonférentielle (3) vers le côté de la première extrémité de bande de roulement, sur le côté de la première extrémité de bande de roulement de la rainure circonférentielle (3), et
les extrémités intérieures (15i) respectives de la pluralité de premières rainures inclinées (15) sont situées de manière adjacente à la pluralité de premières portions inclinées (8) dans une direction axiale du pneumatique.

8. Pneumatique pour motocyclette (1) selon la revendication 7, dans lequel
la rainure circonférentielle (3) inclut en outre des portions de connexion (10) connectant les premières portions inclinées (8) et les deuxièmes portions inclinées (9) adjacentes les unes aux autres dans la direction circonférentielle du pneumatique,
les portions de connexion (10) incluent des premières portions de connexion (10A) situées sur le côté de la première extrémité de bande de roulement, et
les extrémités intérieures (15i) respectives de la pluralité de premières rainures inclinées (15) sont situées sur le côté de la première extrémité de bande de roulement par rapport aux premières portions de connexion (10A).

9. Pneumatique pour motocyclette (1) selon la revendication 7 ou 8, dans lequel
chacune de la pluralité de premières rainures inclinées (15) inclut une paire de bords de rainure (15e) s'étendant dans une direction longitudinale de la première rainure inclinée (15), et
la paire de bords de rainure (15e) incluent une portion effilée (18) dans laquelle la paire de bords de rainure (15e) s'étendent dans une forme effilée vers l'extrémité intérieure (15i).

10. Pneumatique pour motocyclette (1) selon l'une quelconque des revendications 7 à 9, dans lequel
la portion formant bande de roulement (2) est en outre pourvue d'une pluralité de deuxièmes rainures inclinées (16) qui s'étendent depuis des extrémités intérieures (16i) de celles-ci à distance de la rainure circonférentielle (3) vers le côté de la deuxième extrémité de bande de roulement, sur le côté de la deuxième extrémité de bande de roulement de la rainure circonférentielle (3), et
les extrémités intérieures (16i) respectives de la pluralité de deuxièmes rainures inclinées (16) sont situées de manière adjacente à la pluralité de deuxièmes portions inclinées (9) dans la direction axiale du pneumatique.

11. Pneumatique pour motocyclette (1) selon la revendication 10, dans lequel
la rainure circonférentielle (3) inclut en outre des portions de connexion (10) connectant les premières portions inclinées (8) et les deuxièmes portions inclinées (9) adjacentes les unes aux autres dans la direction circonférentielle du pneumatique,
les portions de connexion (10) incluent des deuxièmes portions de connexion(10B) situées sur le côté de la deuxième extrémité de bande de roulement, et
les extrémités intérieures (16i) respectives de la pluralité de deuxièmes rainures inclinées (16) sont situées sur le côté de la deuxième extrémité de bande de roulement par rapport aux deuxièmes portions de connexion (10B).

12. Pneumatique pour motocyclette (1) selon la revendication 10 ou 11, dans lequel
chacune de la pluralité de deuxièmes rainures inclinées (16) inclut une paire de bords de rainure (16e) s'étendant dans une direction longitudinale de la deuxième rainure inclinée (16), et
la paire de bords de rainure (16e) incluent une portion effilée dans laquelle la paire de bords de rainure (16e) s'étendent dans une forme effilée vers l'extrémité intérieure (16i).
